# EUROPÄISCHE PATENTSCHRIFT

(11) **EP 2 743 399 B1**
(45) Veröffentlichungstag und Bekanntmachung des Hinweises auf die Patenterteilung: **30.09.2015**
(21) Anmeldenummer: 12008348.0
(22) Anmeldetag: 14.12.2012
(51) Int. Cl.: E01C 19/00, G01S 15/87

(54) **Baumaschine mit Einrichthilfesystem für eine Sensoreinheit**
Construction machine with adjustment assistance system for a sensor unit
Engin avec système d'aide de montage pour une unité de détection

(43) Veröffentlichungstag der Anmeldung: 18.06.2014
(73) Patentinhaber: Joseph Vögele AG, 67067 Ludwigshafen (DE)
(72) Erfinder: Buschmann, Martin, 67435 Neustadt (DE); Eul, Achim, 68305 Mannheim (DE); Herrmann, Jens, 67378 Zeiskam (DE)
(74) Vertreter: Grünecker Patent- und Rechtsanwälte PartG mbB

(56) Entgegenhaltungen:
- EP-A1- 2 006 448
- DE-T2- 69 722 992
- DE-U1- 8 806 271
- US-A- 3 566 759

## Beschreibung

Die Erfindung betrifft Baumaschinen gemäß dem Oberbegriff des Anspruchs 1 sowie ein Verfahren zum Einrichten von mindestens einer Sensoreinheit an solchen Baumaschinen gemäß dem Oberbegriff des Anspruchs 9.

Solche Baumaschinen sind aus der Praxis bekannt. Die Sensoreinheiten dienen dabei der Überwachung verschiedener Betriebsparameter der Baumaschine und ihres Arbeitsergebnisses. Darüber hinaus können anhand der gewonnenen Daten verschiedene Betriebsparameter der Baumaschine angepasst werden, um so ein möglichst gutes Arbeitsergebnis zu erzielen.

Einige solcher Sensoreinheiten basieren dabei auf der Abtastung einer externen Referenz. Dabei kann es sich beispielsweise um vorhandene Strukturen auf der Baustelle, eine Draht- oder aber eine Laserreferenz handeln, wie zum Beispiel in der US 2004/0068896 A1 beziehungsweise der US 5,917,593 A offenbart. Um eine ordnungsgemäße Funktion während des Betriebes zu gewährleisten, müssen solche Sensoreinheiten vor dem Betrieb so eingerichtet werden, dass sie die Lage der externen Referenz möglichst genau erfassen. Dazu wird die Sensoreinheit so an der Baumaschine angeordnet, dass sich die externe Referenz während des Betriebes in einem Bereich befindet, in dem der oder die Sensoren der Sensoreinheit sie möglichst gut erfassen können. Dieser Vorgang wurde lange Zeit ausschließlich von Hand durch das Bedienpersonal ausgeführt. Dazu musste der Messbereich der Sensoreinheit, zum Beispiel ein Abstand von einem Sensor, bekannt sein. So wurde beispielsweise die Sensoreinheit auf die externe Referenz ausgerichtet und der Abstand zwischen den beiden mit einem Zollstock überprüft.

Inzwischen existieren jedoch auch Baumaschinen mit Einrichthilfesystemen für Sensoreinheiten. Dabei handelt es sich in aller Regel um Sensoreinheiten zum Erfassen einer durch einen Rotationslaser definierten Ebenenreferenz. Der Lasersensor wird in vertikaler Richtung verschoben, bis der Rotationslaser möglichst mittig auf den Sensorbereich auftrifft. Dabei wird dem Bediener durch LEDs angezeigt, ob der Receiver nach oben oder nach unten verschoben werden muss. Einige dieser Systeme sehen auch ein motorisiertes beziehungsweise automatisiertes Verschieben des Receivers vor.

Nachteilig an solchen herkömmlichen Einrichthilfesystemen ist es, dass sie ausschließlich für die Einrichtung von Sensoren geeignet sind, die eine flächenförmige Referenz, wie zum Beispiel eine von einem Rotationslaser aufgespannte Ebene, erfassen. Sensoreinheiten für linienförmige Referenzen, wie zum Beispiel ein statischer Laserstrahl, können mit den existierenden Systemen nur unzureichend eingerichtet werden.

Aufgabe der vorliegenden Erfindung ist es deshalb, eine Baumaschine zur Verfügung zu stellen, die ein Einrichthilfesystem für Sensoreinheiten aufweist, das für eine Vielzahl von unterschiedlichen, auf verschiedenen Prinzipien basierenden Sensoreinheiten geeignet ist.

Diese Aufgabe wird gelöst durch eine Baumaschine mit den Merkmalen des Anspruchs 1 sowie durch ein Verfahren mit den Merkmalen des Anspruchs 9. Vorteilhafte Weiterbildungen sind in den jeweiligen Unteransprüchen gegeben.

Die erfindungsgemäße Baumaschine zeichnet sich dadurch aus, dass sie ein Einrichthilfesystem für eine Sensoreinheit umfasst, das eine Lage einer Referenz relativ zu der Sensoreinheit in mindestens zwei Dimensionen erfasst und das Einrichthilfesystem eine Anzeige beinhaltet, die dazu konfiguriert ist, für die mindestens zwei erfassten Dimensionen die Lage der Referenz relativ zu einem Messbereich der Sensoreinheit gleichzeitig anzuzeigen. Dadurch wird einem Bediener die Einrichtung der Sensoreinheit auch dann deutlich erleichtert, wenn eine linienförmige externe Referenz eingesetzt wird. So kann zum Beispiel bei einem Referenzdraht, der durch einen Ultraschallsensor abgetastet werden soll, sowohl die horizontale als auch die vertikale Position des Referenzdrahts relativ zur Sensoreinheit erfasst und angezeigt werden. Auf diese Weise wird es dem Bediener ermöglicht, den Referenzdraht sowohl horizontal als auch vertikal mittig in einem Messbereich der Sensoreinheit zu positionieren. Bei den erfassten und angezeigten Dimensionen muss es sich allerdings nicht ausschließlich um translatorische Dimensionen handeln. Vielmehr kann auch das Erfassen und Anzeigen von rotatorischen Dimensionen vorgesehen sein. So kann zum Beispiel gewährleistet werden, dass die Bewegungsrichtung der Sensoreinheit während des Betriebs der Baumaschine parallel zur Referenz verläuft.

Die Anzeige kann beispielsweise LEDs umfassen. Diese können zum Beispiel so angeordnet sein, dass das Leuchten einzelner LEDs oder verschiedener Kombinationen von LEDs dem Bediener anzeigen, wie die Sensoreinheit bewegt werden muss, um optimal ausgerichtet zu sein oder aber direkt die Lage der Referenz relativ zur Sensoreinheit anzeigen. Bei der Anzeige kann es sich jedoch auch um ein beliebiges visuelles Anzeigeelement handeln, zum Beispiel ein alphanumerisches oder aber ein LCD-Display.

Vorteilhaft kann es sein, wenn für jede angezeigte Dimension mindestens ein jeweils zugehöriges Anzeigeelement vorgesehen ist. Dadurch wird das schnelle Ablesen erleichtert. Es kann sich bei den Anzeigeelementen um jeweils gleiche Elemente handeln. Es ist jedoch auch möglich, dass für verschiedene Dimensionen unterschiedliche Elemente vorgesehen sind. Insbesondere können für rotatorische Dimensionen andere Anzeigeelemente verwendet werden als für translatorische Dimensionen.

Besonders günstig ist es, wenn zur Anpassung der Ausrichtung der Sensoreinheit relativ zur Referenz mindestens ein Antrieb vorgesehen ist. Auf diese Weise wird dem Bedienpersonal das Einrichten der Sensoreinheit weiter erleichtert. Ein entsprechend gewählter Antrieb kann darüber hinaus eine feinere Justierung der Ausrichtung ermöglichen.

In einer Variante kann der Antrieb manuell steuerbar sein.

In einer weiteren Variante kann der Antrieb automatisiert anhand der erfassten Lage der Referenz relativ zur Sensoreinheit regelbar sein. Dadurch wird der Zeitaufwand des Bedienpersonals für die Einrichtung der Sensoreinheit auf ein Mindestmaß reduziert.

Vorteilhaft kann es außerdem sein, wenn die Sensoreinheit nicht nur einen, sondern mehrere Sensoren umfasst. Dabei kann es sich um mehrere gleiche oder aber unterschiedliche Sensoren handeln. Der Einsatz von mehreren Sensoren kann einerseits die Zahl der Einsatzmöglichkeiten erhöhen, andererseits kann sie eine präzisere Erfassung der Referenz ermöglichen.

Es ist denkbar, dass es sich bei der Baumaschine um einen Straßenfertiger oder einen Beschicker handelt.

Die Erfindung bezieht sich auch auf ein Verfahren zum Einrichten von mindestens einer Sensoreinheit an einer Baumaschine. Dabei wird die Sensoreinheit auf eine externe Referenz ausgerichtet. Die Lage dieser Referenz relativ zu der Sensoreinheit wird dabei durch ein Einrichthilfesystem in mindestens zwei Dimensionen erfasst. Basierend auf den erfassten Lagedaten wird die Lage der Referenz relativ zu einem Messbereich der Sensoreinheit durch eine Anzeige des Einrichthilfesystems zweidimensional angezeigt. Als Messbereich wird derjenige Bereich bezeichnet, in dem die Sensoreinheit die genauesten Messergebnisse liefert. Anhand der angezeigten Informationen kann die Sensoreinheit nun in ihrer Ausrichtung relativ zur Referenz angepasst werden. Dadurch, dass mindestens zwei Dimensionen der Lage der Referenz relativ zum Messbereich erfasst und angezeigt werden, kann die Sensoreinheit genauer auf die Referenz ausgerichtet werden. Insbesondere bei linienförmigen Referenzen, wie zum Beispiel einer Drahtreferenz, ist eine erfindungsgemäße Anzeige hilfreich.

Denkbar ist es, dass zur Anzeige LEDs eingesetzt werden. Diese können auf verschiedene Arten angeordnet werden, die ein intuitives Ablesen ermöglichen. Es können jedoch auch zum Beispiel alphanumerische oder aber Flüssigkristallanzeigen verwendet werden.

Besonders günstig ist es, wenn zur Ausrichtung der Sensoreinheit mindestens ein Antrieb eingesetzt wird.

In einer Variante kann dieser Antrieb manuell gesteuert werden.

In einer weiteren vorteilhaften Variante kann der Antrieb automatisiert anhand der erfassten Lage der Referenz relativ zur Sensoreinheit geregelt werden.

Es ist denkbar, dass die Baumaschine ein Straßenfertiger oder ein Beschicker ist.

Die Erfindung bezieht sich auf eine Baumaschine mit einem Einrichthilfesystem für mindestens eine Sensoreinheit und auf ein Verfahren zum Einrichten von mindestens einer Sensoreinheit an einer Baumaschine.

Im Folgenden wird ein vorteilhaftes Ausführungsbeispiel der Erfindung anhand von Zeichnungen näher erläutert.
- Figur 1: zeigt eine Baumaschine mit einer Sensoreinheit, die eine externe Referenz abtastet.
- Figur 2: zeigt eine detailliertere Ansicht der Sensoreinheit und der Referenz.
- Figur 3 bis 8: zeigen verschiedene Anordnungen von LEDs, die für die mindestens zweidimensionale Anzeige der Lage der externen Referenz relativ zur Sensoreinheit geeignet ist. Die schwarz ausgefüllten Kreise stehen dabei für leuchtende LEDs, die schwarz umrandeten weißen Kreise stehen für nicht leuchtende LEDs.

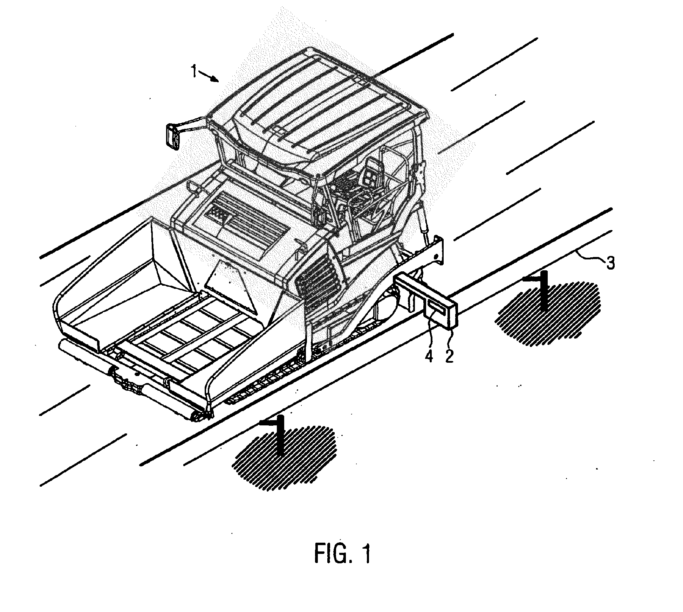

In Figur 1 ist eine Baumaschine 1, in diesem Fall ein Straßenfertiger, dargestellt, die mit Hilfe einer Sensoreinheit 2 eine Referenz 3 abtastet. Im beschriebenen Ausführungsbeispiel handelt es sich um eine linienförmige Drahtreferenz. Es kann sich jedoch um eine beliebige Art von Referenz 3 wie zum Beispiel ein Laserstrahl oder aber Bodenstrukturen auf der Baustelle handeln. Die Kombination aus Referenz 3 und Sensoreinheit 2 kann im vorliegenden Ausführungsbeispiel der Steuerung der Einbauhöhe dienen. Es sind jedoch beliebige Einsatzzwecke, bei denen eine externe Referenz 3 abgetastet wird, denkbar. An der Sensoreinheit 2 ist eine Anzeige 4 angeordnet.

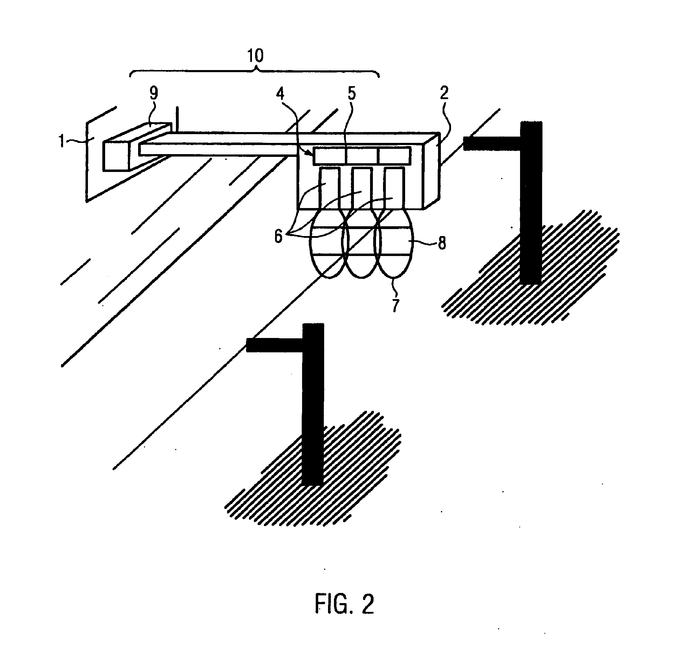

In Figur 2 ist die Sensoreinheit 2 detaillierter abgebildet. Nun ist zu erkennen, dass die Anzeige 4 drei Anzeigeelemente 5 umfasst. Darüber hinaus ist zu erkennen, dass die Sensoreinheit 2 im vorliegenden Ausführungsbeispiel drei Ultraschallsensoren 6 umfasst. Es kann jedoch eine beliebige Anzahl von Sensoren 6 mit beliebigen Messprinzipien vorgesehen sein. Im vorliegenden Ausführungsbeispiel senden die Sensoren 6 jeweils eine Ultraschallkeule 7 aus und verfügen darüber hinaus über jeweils einen Messbereich 8, in dem die genauesten Messergebnisse erzielbar sind. Die Sensoreinheit 2 muss nun so ausgerichtet werden, dass sich die Referenz 3 im Messbereich 8 befindet. Im dargestellten Ausführungsbeispiel ist zur Anpassung der Ausrichtung der Sensoreinheit 2 ein Antrieb 9 vorgesehen. Dieser bildet in diesem Fall zusammen mit der Anzeige 4 mit den Anzeigeelementen 5 und einer Auswertungselektronik (nicht dargestellt), die die Lage der Referenz 3 anhand der von den Sensoren 6 gemessenen Daten ermittelt, ein Einrichthilfesystem 10. Dieses kann jedoch auch nur aus der Anzeige 4 und der Auswertungselektronik bestehen.

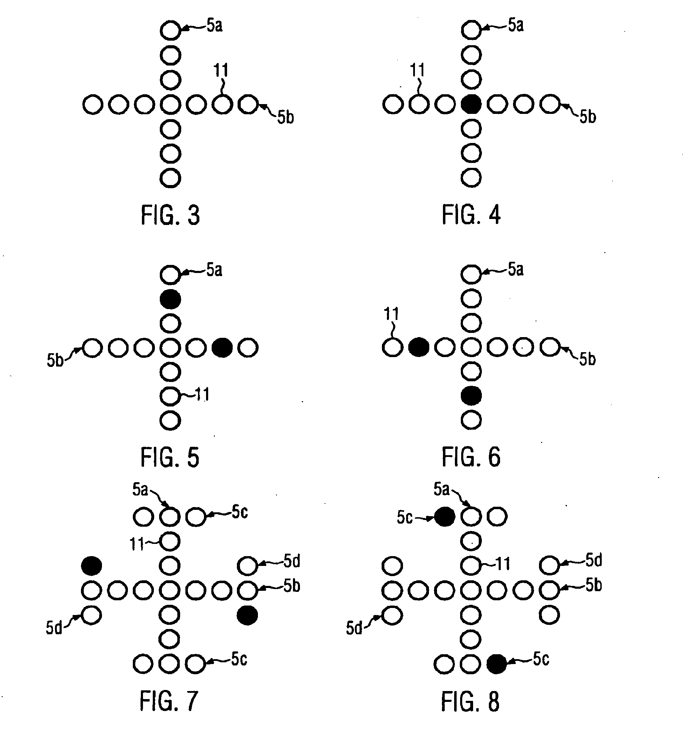

Die Figuren 3 bis 6 zeigen ein erstes Ausführungsbeispiel für die Anzeige 4. Hier sind mehrere LEDs 11 in zwei rechtwinklig zueinander verlaufenden, geraden Linien angeordnet. Jede Linie ist dabei als zugehöriges Anzeigeelement 5 zu jeweils einer bestimmten Dimension vorgesehen. Im vorliegenden Ausführungsbeispiel wird die horizontale und die vertikale Lage der Referenz 3 relativ zum Messbereich 8 der Sensoreinheit 2 angezeigt.

Die vertikale Lage wird dabei von einem vertikalen Anzeigeelement 5a, die horizontale Lage von einem horizontalen Anzeigeelement 5b angezeigt. In Figur 3 ist keine der LEDs 11 als leuchtend dargestellt, was durch die schwarz umrandeten, weißen Kreise dargestellt ist. In Figur 4 ist die mittlere LED 11 als leuchtend dargestellt, symbolisiert durch den schwarz ausgefüllten Kreis. So wird angezeigt, dass sich die Drahtreferenz 3 sowohl horizontal, als auch vertikal mittig im Messbereich 8 befindet.

In Figur 5 sind zwei der LEDs 11 als leuchtend dargestellt. Hier wird angezeigt, dass sich die Drahtreferenz zu weit oben und zu weit rechts befindet. Dadurch weiß der Bediener, dass er die Sensoreinheit 2 nach unten und nach links verschieben muss. In Figur 6 ist die Anzeige für eine Abweichung der Drahtreferenz 3 nach unten und nach links dargestellt.

Die Figuren 7 und 8 zeigen eine modifizierte Variante des ersten Ausführungsbeispiels. Die zwei rechtwinklig zueinander verlaufenden Linien aus LEDs 11 wurde durch die weiteren Anzeigeelemente 5c und 5d erweitert. Dabei zeigt das Anzeigeelement für die vertikale Rotation 5c dem Bediener an, ob und in welche Richtung die Sensoreinheit 2 um eine vertikale Achse rotiert werden muss, damit sie optimal ausgerichtet ist. Das Anzeigeelement für die Rotation um eine horizontale Achse 5d zeigt dem Bediener an ob und in welche Richtung die Sensoreinheit 2 um eine horizontale Achse rotiert werden muss, um eine möglichst optimale Ausrichtung auf die externe Referenz 3 zu erreichen. In Figur 7 wird dem Bediener signalisiert, dass eine rotatorische Abweichung um eine horizontale Achse im Uhrzeigersinn vorliegt und die Sensoreinheit 2 um eine horizontale Achse gegen den Uhrzeigersinn gedreht werden muss. In Figur 8 wird signalisiert, dass eine rotatorische Abweichung um eine vertikale Achse gegen den Uhrzeigersinn vorliegt und die Sensoreinheit um eine vertikale Achse im Uhrzeigersinn gedreht werden muss. Sowohl in Figur 7 als auch in Figur 8 signalisiert die zentrale leuchtende LED 11, dass keine translatorische Anpassung der Ausrichtung nötig ist.

Bei der Baumaschine 1 kann es sich um eine beliebige Baumaschine handeln, die über Sensoreinheiten 2 verfügt, die auf eine externe Referenz 3 ausgerichtet werden müssen. Dies kann insbesondere auch ein Beschicker sein.

Bei den Sensoren 6 kann es sich um beliebige Arten von Sensoren, wie zum Beispiel Lichtsensoren, Drucksensoren oder Auslenkungssensoren handeln. Ebenso kann es sich bei der Referenz 3 um ein beliebiges Referenzmedium handeln, dass zur Verwendung mit dem jeweiligen Sensor 6 beziehungsweise dem ihm zugrundeliegenden Messprinzip geeignet ist.

Der Antrieb 9 kann manuell steuerbar sein oder aber automatisiert anhand der erfassten Lagedaten der Referenz 3 regelbar. Denkbar ist es auch, dass beides der Fall ist. So könnte der Bediener beispielsweise die Grobeinstellung vornehmen und die Feineinstellung automatisiert ablaufen lassen. Die manuelle Steuerung kann durch ein beliebiges Bedienelement der Baumaschine 1 erfolgen. Dieses kann sich an einem beliebigen Ort, wie zum Beispiel im Fahrerstand der Baumaschine 1 befinden.

Die LEDs 11 der Anzeige 4 können in beliebiger Art und Weise angeordnet werden, sodass ein intuitives Ablesen der Anzeige 4 ermöglicht wird. Es können ebenso gut alphanumerische Displays verwendet werden. Außerdem können LCDs eingesetzt werden, die eine Vielfalt an graphischen Anzeigen ermöglichen. Dann sind auch aufwendige, bildhafte Informationen beziehungsweise Anweisungen für den Bediener denkbar.

Das Einrichthilfesystem 10 muss nicht notwendigerweise optische Signale einsetzen, um dem Bediener Informationen zu übermitteln. Es sind auch Varianten denkbar, die zum Beispiel akustische Signale oder aber Vibrationen einsetzen.

Ist ein Antrieb 9 und ein automatisiertes Einrichten vorgesehen, sind außerdem Varianten des Einrichthilfesystems 10 vorstellbar, die keine Anzeige 4 umfassen. In einem solchen Fall liefe der Einrichtvorgang ohnehin automatisch ohne das Zutun des Bedieners ab. Das Anzeigen der aktuellen Lage der Referenz 3 oder aber der erforderlichen Bewegungsrichtung wäre dann nicht notwendig.

## Patentansprüche

1. Baumaschine (1), die mindestens eine Sensoreinheit (2) umfasst, die einen Messbereich (8) aufweist, wobei die Sensoreinheit (2) in ihrer Ausrichtung relativ zur Baumaschine (1) veränderbar ist, wodurch auch die Positionierung oder Orientierung des Messbereichs (8) relativ zur Baumaschine (1) veränderbar ist,
wobei die Sensoreinheit (2) für die Erfassung der Lage einer externen Referenz (3) konfiguriert ist, und
die Baumaschine (1) des Weiteren ein Einrichthilfesystem (10) für die Sensoreinheit (2) umfasst, wobei das Einrichthilfesystem (10) eine an der Sensoreinheit (2) angeordnete Anzeige (4) beinhaltet, die dazu eingerichtet ist, einem Bediener beim Ausrichten der Sensoreinheit (2) auf die Referenz (3) anzuzeigen, in welche Richtung die Sensoreinheit (2) bewegt werden muss, damit sich die Referenz (3) in dem Messbereich (8) der Sensoreinheit (2) befindet,
**dadurch gekennzeichnet, dass** die Sensoreinheit (2) dazu konfiguriert ist, eine Lage der Referenz (3) relativ zur Sensoreinheit (2) in mindestens zwei Dimensionen zu erfassen, und
dass die Anzeige (4) dazu konfiguriert ist, für die mindestens zwei erfassten Dimensionen gleichzeitig die Lage der Referenz (3) relativ zum Messbereich (8) der Sensoreinheit (2) anzuzeigen.

2. Baumaschine nach Anspruch 1, **dadurch gekennzeichnet, dass** die Anzeige (4) LEDs (11) umfasst.

3. Baumaschine nach Anspruch 1 oder 2, **dadurch gekennzeichnet, dass** für jede angezeigte Dimension mindestens jeweils ein zugehöriges Anzeigeelement (5, 5a, 5b, 5c, 5d) vorgesehen ist.

4. Baumaschine nach einem der vorangehenden Ansprüche, **dadurch gekennzeichnet, dass** zur Anpassung der Ausrichtung der Sensoreinheit (2) relativ zur Referenz (3) mindestens ein Antrieb (9) vorgesehen ist.

5. Baumaschine nach Anspruch 4, **dadurch gekennzeichnet, dass** der Antrieb (9) manuell steuerbar ist.

6. Baumaschine nach Anspruch 4 oder 5, **dadurch gekennzeichnet, dass** der Antrieb (9) automatisiert anhand der erfassten Lage der Referenz (3) relativ zur Sensoreinheit (2) regelbar ist.

7. Baumaschine nach einem der vorangehenden Ansprüche, **dadurch gekennzeichnet, dass** die Sensoreinheit (2) einen oder mehrere Sensoren (6) umfasst.

8. Baumaschine nach einem der vorangehenden Ansprüche, **dadurch gekennzeichnet, dass** es sich bei der Baumaschine (1) um einen Straßenfertiger oder einen Beschicker handelt.

9. Verfahren zum Einrichten mindestens einer Sensoreinheit (2) an einer Baumaschine (1), umfassend:
a) Ausrichten der Sensoreinheit (2) auf eine externe Referenz (3),
b) Erfassen einer Lage der externen Referenz (3) relativ zu einer Sensoreinheit (2) durch ein Einrichthilfesystem (10),
c) Anzeigen der Lage der Referenz (3) relativ zu einem Messbereich (8) der Sensoreinheit (2) durch eine an der Sensoreinheit (2) angeordnete Anzeige (4) des Einrichthilfesystems (10),
d) Anpassen der Ausrichtung der Sensoreinheit (2) relativ zur Referenz (3) basierend auf den von der Anzeige (4) ausgegebenen Informationen,
**dadurch gekennzeichnet, dass** mindestens zwei Dimensionen der Lage der Referenz (3) relativ zum Messbereich (8) der Sensoreinheit (2) erfasst und gleichzeitig angezeigt werden.

10. Verfahren nach Anspruch 9, **dadurch gekennzeichnet, dass** zur Anzeige LEDs (11) eingesetzt werden.

11. Verfahren nach Anspruch 9 oder 10, **dadurch gekennzeichnet, dass** zur Anpassung der Ausrichtung der Sensoreinheit (2) mindestens ein Antrieb (9) eingesetzt wird.

12. Verfahren nach Anspruch 11, **dadurch gekennzeichnet, dass** der Antrieb (9) manuell gesteuert wird.

13. Verfahren nach Anspruch 11 oder 12, **dadurch gekennzeichnet, dass** der Antrieb (9) automatisiert anhand der erfassten Lage der Referenz (3) relativ zur Sensoreinheit (2) geregelt wird.

14. Verfahren nach einem der Ansprüche 9-13, **dadurch gekennzeichnet, dass** die Baumaschine (1) ein Straßenfertiger oder ein Beschicker ist.

## Claims

1. Construction machine (1) comprising at least one sensor unit (2) which has a measurement range (8), the sensor unit (2) being variable in its orientation relative to the construction machine (1), whereby position or orientation of the measurement range (8) relative to the construction machine (1) is also variable, the sensor unit (2) being configured for detecting the position of an external reference (3), and
the construction machine (1) further comprising a setup assistance system (10) for the sensor unit (2), the setup assistance system (10) including a display (4) which is arranged on the sensor unit (2) and configured to indicate to an operator while the sensor unit (2) is oriented relative to the reference (3) in which direction the sensor unit (2) has to be moved in order for the reference (3) to be located in the measurement range (8) of the sensor unit (2),
**characterized in that the** sensor unit (2) is configured to detect a position of the reference (3) relative to the sensor unit (2) in at least two dimensions, and
that the display (4) is configured to display the position of the reference (3) relative to the measurement range (8) of the sensor unit (2) for the at least two detected dimensions simultaneously.

2. Construction machine according to claim 1, **characterized in that** the display (4) comprises LEDs (11).

3. Construction machine according to claim 1 or 2, **characterized in that** at least one respective associated display element (5, 5a, 5b, 5c, 5d) is provided for each dimension displayed.

4. Construction machine according to any one of the preceding claims, **characterized in that** at least one drive (9) is provided for adapting the orientation of the sensor unit (2) relative to the reference (3).

5. Construction machine according to claim 4, **characterized in that** the drive (9) is manually controllable.

6. Construction machine according to claim 4 or 5, **characterized in that** the drive (9) is controllable in automated fashion on the basis of the detected position of the reference (3) relative to the sensor unit (2).

7. Construction machine according to any one of the preceding claims, **characterized in that** the sensor unit (2) comprises one or a plurality of sensors (6).

8. Construction machine according to any one of the preceding claims, **characterized in that** the construction machine (1) is a road paver or a feeder.

9. Method for setting up at least one sensor unit (2) on a construction machine (1), comprising:
a) orienting the sensor unit (2) relative to an external reference (3),
b) detecting a position of the external reference (3) relative to a sensor unit (2) by a setup assistance system (10),
c) displaying the position of the reference (3) relative to a measurement range (8) of the sensor unit (2) by a display (4) of the setup assistance system (10) the display being arranged on the sensor unit (2),
d) adjusting the orientation of the sensor unit (2) relative to the reference (3) based on the information outputted by the display (4),
**characterized in that** at least two dimensions of the position of the reference (3) relative to the measurement range (8) of the sensor unit (2) are detected and simultaneously displayed.

10. Method according to claim 9, **characterized in that** LEDs (11) are used for the display.

11. Method according to claim 9 or 10, **characterized in that** at least one drive (9) is used for adjusting the orientation of the sensor unit (2).

12. Method according to claim 11, **characterized in that** the drive (9) is manually controlled.

13. Method according to claim 11 or 12, **characterized in that** the drive (9) is controlled in automated fashion on the basis of the detected position of the reference (3) relative to the sensor unit (2).

14. Method according to any one of claims 9-13, **characterized in that** the construction machine (1) is a road paver or a feeder.

## Revendications

1. Engin de travaux publics (1), qui comprend au moins une unité de capteur (2) présentant une zone de mesure (8), l'unité de capteur (2) pouvant être modifiée quant à son orientation par rapport à l'engin de travaux publics (1), ce qui permet également de faire varier le positionnement ou l'orientation de la zone de mesure (8) par rapport à l'engin de travaux publics (1),
l'unité de capteur (2) étant configurée pour relever la position d'une référence externe (3), et
l'engin de travaux publics (1) comprenant par ailleurs un système d'aide au réglage (10) pour l'unité de capteur (2), le système d'aide au réglage (10) renfermant un système de visualisation (4) agencé sur l'unité de capteur (2), qui est conçu pour indiquer à un opérateur, lors de l'orientation de l'unité de capteur (2) sur la référence (3), dans quelle direction doit être déplacée l'unité de capteur (2) pour que la référence (3) se trouve dans la zone de mesure (8) de l'unité de capteur (2),
**caractérisé en ce que** l'unité de capteur (2) est configurée pour relever une position de la référence (3) par rapport à l'unité de capteur (2) dans au moins deux dimensions, et
**en ce que** le système de visualisation (4) est configuré pour indiquer simultanément pour les deux dimensions relevées, la position de la référence (3) par rapport à la zone de mesure (8) de l'unité de capteur (2).

2. Engin de travaux publics selon la revendication 1, **caractérisé en ce que** le système de visualisation (4) comporte des diodes électroluminescentes (LED) (11).

3. Engin de travaux publics selon la revendication 1 ou la revendication 2, **caractérisé en ce que** pour chaque dimension indiquée, il est prévu respectivement au moins un élément de visualisation (5, 5a, 5b, 5c, 5d) associé.

4. Engin de travaux publics selon l'une des revendications précédentes, **caractérisé en ce que** pour adapter l'orientation de l'unité de capteur (2) par rapport à la référence (3), il est prévu au moins un moyen d'entraînement (9).

5. Engin de travaux publics selon la revendication 4, **caractérisé en ce que** le moyen d'entraînement (9) peut être commandé manuellement.

6. Engin de travaux publics selon la revendication 4 ou la revendication 5, **caractérisé en ce que** le moyen d'entraînement (9) peut être régulé de manière automatisée au regard de la position relevée de la référence (3) par rapport à l'unité de capteur (2).

7. Engin de travaux publics selon l'une des revendications précédentes, **caractérisé en ce que** l'unité de capteur (2) comprend un ou plusieurs capteurs (6).

8. Engin de travaux publics selon l'une des revendications précédentes, **caractérisé en ce qu'**il s'agit, concernant l'engin de travaux publics (1), d'un finisseur de route ou d'un alimentateur.

9. Procédé pour le réglage d'au moins une unité de capteur (2) sur un engin de travaux publics (1), comprenant :
a) l'orientation de l'unité de capteur (2) vers une référence externe (3),
b) le relevé d'une position de la référence externe (3) par rapport à une unité de capteur (2) par un système d'aide au réglage (10),
c) la visualisation de la position de la référence (3) par rapport à une zone de mesure (8) de l'unité de capteur (2) par un système de visualisation (4) du système d'aide au réglage (10), qui est agencé sur l'unité de capteur (2),
d) l'adaptation de l'orientation de l'unité de capteur (2) par rapport à la référence (3) en se basant sur les informations fournies par le système de visualisation (4),
**caractérisé en ce que** l'on relève et visualise simultanément deux dimensions de la position de la référence (3) par rapport à la zone de mesure (8) de l'unité de capteur (2).

10. Procédé selon la revendication 9, **caractérisé en ce que** l'on utilise des diodes électroluminescentes (LED) (11) pour la visualisation.

11. Procédé selon la revendication 9 ou la revendication 10, **caractérisé en ce que** pour adapter l'orientation de l'unité de capteur (2), on utilise au moins un moyen d'entraînement (9).

12. Procédé selon la revendication 11, **caractérisé en ce que** le moyen d'entraînement (9) est commandé manuellement.

13. Procédé selon la revendication 11 ou la revendication 12, **caractérisé en ce que** le moyen d'entraînement (9) est régulé de manière automatisée au regard de la position relevée de la référence (3) par rapport à l'unité de capteur (2).

14. Procédé selon l'une des revendications 9 à 13, **caractérisé en ce que** l'engin de travaux publics (1) est un finisseur de route ou un alimentateur.
